# EUROPEAN PATENT APPLICATION

(11) **EP 4 095 426 A1**
(43) Date of publication of application: **30.11.2022**
(21) Application number: 21744083.3
(22) Date of filing: 12.01.2021
(51) Int. Cl.: F16M 11/04, F16M 11/06, F16M 11/38, A47G 9/10, H04M 1/04

(54) **PILLOW STAND**

(30) Priority: 22.01.2020 CN 202020144140 U
(71) Applicant: Shen Zhen Xgear Technology Co., Ltd, Shen Zhen, Guangdong 518000 (CN)
(72) Inventor: WANG, Jie, Shenzhen, Guangdong 518000 (CN)
(74) Representative: Ipey
(86) International application number: PCT/CN2021/071271
(87) International publication number: WO 2021/147706

(57) **Abstract**

The present invention relates to a throw pillow bracket. The throw pillow bracket comprises a throw pillow base, a supporting piece and a mobile phone clip, the supporting piece connecting the base and the mobile phone clip, the supporting piece is a foldable rod, and the throw pillow base includes a soft bag and an upper cover. The soft bag is a cloth bag filled with EPS particles, the upper cover is connected to an upper face of the soft bag, and the supporting piece is connected to the upper cover. The soft bag is a cloth bag filled with EPS particles which can flow when placed on an unsmooth surface, the throw pillow bracket can automatically leveled by slight pressing, so that a whole bottom can in close contact with a load-bearing surface and the whole throw pillow bracket can be firmly erected on the load-bearing surface.

## Description

### Field of invention

The present invention relates to an auxiliary product of a mobile phone or a tablet personal computer, in particular to a throw pillow bracket.

### Background art of the invention

With the progress of science and technology and the development of society, various APP emerge in an endless stream, current mobile phones and tablet personal computers have more and more recreational functions, and people's life and work interact with the mobile phones more and more. Moreover, since a screen of a mobile phone is made bigger and bigger at present, when a person holds a mobile phone or a tablet personal computer in hand to see a movie for a long time, he/she may fell hand tired and shoulder sour, affecting use experience. Therefore, brackets of mobile phones and tablet personal computers are produced accordingly. Each of current mobile phone brackets is comprised of a base, a connecting piece and a clip, wherein the base is usually a counterweight disc or clamping piece configured to fix the bracket onto a table top, the clip is configured to clamp a mobile phone or tablet personal computer, and the connecting piece is configured to connect the base and the clip. For an existing mobile phone bracket, whether in a counterweight type or a clamping type, a base thereof is made of hard material, so the mobile phone bracket cannot be placed stably when used on a soft surface such as a leg, a sofa or a mattress, being unable to use. Modern people spend more and more time on a sofa or bed when using mobile phones or tablet personal computers for entertainment and work. Therefore, there is an urgent need to design a mobile phone bracket which can be used on a soft load-bearing surface to expand a use space of a mobile phone and a tablet personal computer.

### Disclosure of the invention

The purpose of the present invention is to overcome the above disadvantages and defects in the prior art and provide a novel throw pillow bracket. The present invention is used for placing a mobile phone or a tablet personal computer, which is convenient for people to use the mobile phone and tablet personal computer, especially when the throw pillow bracket is placed on a soft sofa cushion or mattress or placed on an unsmooth place for use.

The purpose of the present invention is realized by following technical solution:
A throw pillow bracket, comprising a throw pillow base, a supporting piece and a mobile phone clip, the supporting piece connecting the base and the mobile phone clip, wherein the supporting piece is a foldable rod, the throw pillow base includes a soft bag and an upper cover, the soft bag is a cloth bag filled with EPS particles, the upper cover is connected to an upper face of the soft bag, and the supporting piece is connected to the upper cover. In this way, the throw pillow base is comprised of a soft bag and an upper cover, the upper cover is a hard upper cover, the supporting piece is connected to the upper cover, the upper cover can support the mobile phone bracket, the supporting piece is a foldable rod, and if there is no need to use the bracket, the supporting piece may be folded, so the bracket becomes a throw pillow. The present invention is provided with a soft bag which is a cloth bag filled with EPS particles, the EPS particles can flow, when placed on a soft sofa or mattress or placed on an unsmooth surface, the throw pillow bracket may be automatically leveled by slight pressing so that a whole bottom may be in close contact with a load-bearing surface and the whole throw pillow bracket may be firmly erected on the load-bearing surface facilitating use.

Another preferred solution of the present invention is: a metal ring is arranged on the soft bag, the metal ring is fixed to the soft bag, the upper cover is provided with a groove adapted to the metal ring in shape and size at a bottom, and the metal ring is embedded in the groove at the bottom of the upper cover. In this way, a metal ring is arranged on the soft bag and support to the upper cover is increased by the metal ring so that the upper cover is more stable, the metal ring is embedded in the groove at the bottom of the upper cover so that assembly is convenient, stress is uniform and appearance is more beautiful.

Another preferred solution of the present invention is: based on the above solution, the upper cover is further provided with a barrier strip. Because the barrier strip is provided, when a tablet personal computer is used, the barrier strip can block the drop of the tablet personal computer.

Another preferred solution of the present invention is: based on the above solution, the barrier strip is a plastic strip, a silicone strip or a rubber strip. The plastic strip, the silicone strip or the rubber strip is soft so as not to damage the tablet personal computer and has the advantages of good hand feeling and better use experience.

### Description of the drawings

Fig. 1 is a structural schematic diagram of a throw pillow bracket in embodiment 1 of the present invention.
Fig. 2 is a structural schematic diagram of a soft bag of a throw pillow bracket in embodiment 1 of the present invention.
Fig. 3 is a structural schematic diagram of a bottom of an upper cover of a throw pillow bracket in embodiment 1 of the present invention.
Fig. 4 is a structural schematic diagram of a throw pillow bracket in embodiment 1 of the present invention when a tablet personal computer is used.

### Detailed description of the invention

Some preferred embodiments of the present invention are provided below in order to further understand the present invention.

### Embodiment 1

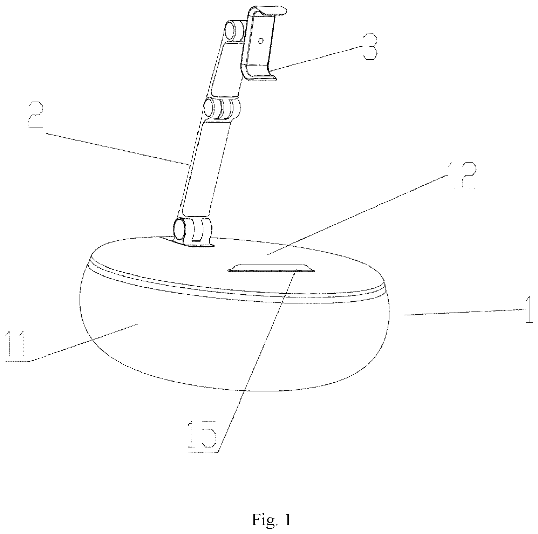

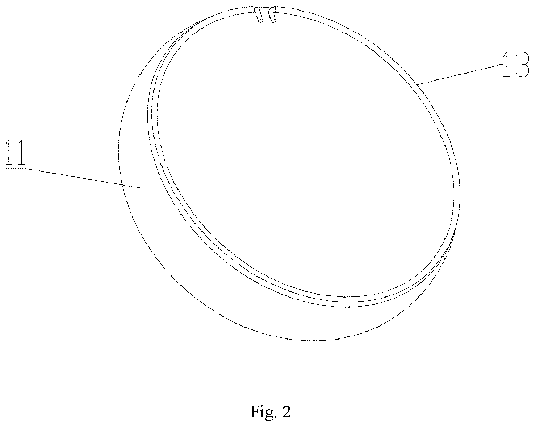

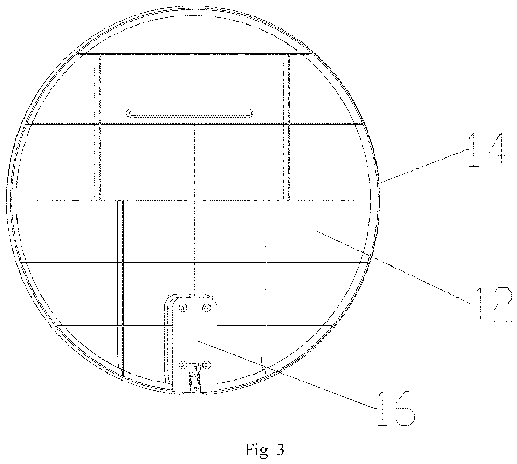

Fig. 1 is one of preferred implementation solutions of the present invention, Fig. 1 is a structural schematic diagram of a throw pillow bracket in embodiment 1 of the present invention, Fig. 2 is a structural schematic diagram of a soft bag of a throw pillow bracket in embodiment 1 of the present invention, and Fig. 3 is a structural schematic diagram of a bottom of an upper cover of a throw pillow bracket in embodiment 1 of the present invention. As shown in Fig. 1, Fig. 2 and Fig. 3, a throw pillow bracket of the present invention comprises a throw pillow base 1, a supporting piece 2 and a mobile phone clip 3, the supporting piece connecting the base and the mobile phone clip, wherein the supporting piece is a foldable rod 2, the throw pillow base includes a soft bag 11 and an upper cover 12, the soft bag is a cloth bag filled with EPS particles, the upper cover is connected to an upper face of the soft bag, and the supporting piece is connected to the upper cover.

More preferably, a metal ring 13 is arranged on the soft bag, the metal ring is fixed to the soft bag, and may be sewed to the soft bag, i.e. the cloth bag to support and shape the cloth bag and support the upper cover, the upper cover is provided with a groove 14 adapted to the metal ring in shape and size at a bottom, and the metal ring is embedded in the groove at the bottom of the upper cover. The upper cover is further provided with a fixing seat 16 configured to fix the supporting piece.

More preferably, the upper cover is further provided with a barrier strip 15. The barrier strip is a silicone strip, or may be a plastic strip or a rubber strip, or may be a silicone or rubber coated metal strip.

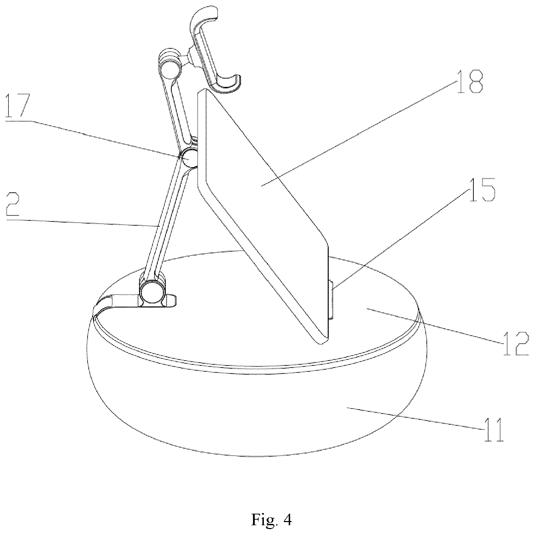

Fig. 4 is a structural schematic diagram of a throw pillow bracket in embodiment 1 of the present invention when a tablet personal computer is used. As shown in the figure, the foldable rod includes two sections of arms connected by a rotating joint, the foldable rod is also connected with the upper cover by the rotating joint, the connecting position of the foldable rod and the upper cover is in one half region, the barrier strip is in the other half region opposite thereto, a bottom end of the tablet personal computer 18 is supported on the barrier strip, and a back side of the tablet personal computer is supported on a median joint 17 of the foldable rod.

The above embodiment is a preferred implementation solution of the present invention. However, the implementation solution of the present invention is not limited by the above embodiment. Any other change, modification, replacement, combination and simplification made without departing from the spiritual essence and principle of the present invention shall be equivalent substitution mode, and shall be included within the protection scope of the present invention.

## Claims

1. A throw pillow bracket, comprising a throw pillow base, a supporting piece and a mobile phone clip, the supporting piece connecting the base and the mobile phone clip, wherein the supporting piece is a foldable rod, the throw pillow base includes a soft bag and an upper cover, the soft bag is a cloth bag filled with EPS particles, the upper cover is connected to an upper face of the soft bag, and the supporting piece is connected to the upper cover.

2. The throw pillow bracket according to claim 1, **characterized in that** a metal ring is arranged on the soft bag, the metal ring is fixed to the soft bag, the upper cover is provided with a groove adapted to the metal ring in shape and size at a bottom, and the metal ring is embedded in the groove at the bottom of the upper cover.

3. The throw pillow bracket according to claim 2, **characterized in that** the upper cover is further provided with a barrier strip.

4. The throw pillow bracket according to claim 3, **characterized in that** the barrier strip is a plastic strip, a silicone strip or a rubber strip.
